(19) Europäisches Patentamt

European Patent Office

Office européen des brevets

(11) **EP 4 322 365 A1**

(12) **EUROPEAN PATENT APPLICATION**

(43) Date of publication:
**14.02.2024  Bulletin 2024/07**

(51) International Patent Classification (IPC):
***H02J 7/00*** (2006.01)

(21) Application number: **22189560.0**

(22) Date of filing: **09.08.2022**

(52) Cooperative Patent Classification (CPC):
**H02J 7/0024; H02J 7/0063; H02J 7/00712**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **FEKRIASL, Sajjad**
  **2400 Mol (BE)**
• **COENEN, Peter**
  **2400 Mol (BE)**

(74) Representative: **IPLodge bv**
**Technologielaan 9**
**3001 Heverlee (BE)**

(54) **A BATTERY SYSTEM AND A METHOD OF OPERATING SAID BATTERY SYSTEM**

(57)    The invention relates to a battery system and a method of operating said battery system. The system includes a plurality of battery cell units that are selectively electrically connectable in series and/or parallel for providing a desired target output voltage. One or more parameters associated to the plurality of the battery cell units are monitored, and for each successive time interval a total number of battery cell units required for generating the desired target output voltage at a present time interval is determined, and a subgroup of battery cell units of the plurality of battery cell units based on a predefined criterion coupled to the one or more monitored parameters is selected, the subgroup having the total number of battery cell units required for the present time interval. The battery cell units in the subgroup are operated in series and/or parallel for providing the desired target output voltage at the present time interval.

10

FIG. 1

EP 4 322 365 A1

**Description**

FIELD OF THE INVENTION

The invention relates to a method of operating a battery system with a plurality of battery cell units (e.g. battery cells or modules). Furthermore, the invention relates to a battery system. Also, the invention relates to an electrical device and an energy storage device comprising the battery system. Additionally, the invention relates to a computer program product.

BACKGROUND TO THE INVENTION

Batteries can be configured to provide DC voltage and current. They can be considered as a voltage source with a series internal resistance. Hence the output voltage of a battery depends on the current (charge or discharge). The voltage further depends on the state of charge (SoC) and may depend on the state of health (SoH) and temperature.

Some electrical loads need to be supplied either by a constant DC voltage or by an AC voltage, the amplitude of which may depend on frequency or other application dependent parameters. Usually a converter or inverter is used to convert the battery output to the required DC or AC voltage. However, there may be a number of problems associated with this approach:

○ High frequency switching reduces efficiency of the converter.
○ High frequency harmonics lead to EMI and additional filtering requirements.
○ An inductor and/or filter (needed to mitigate high frequency switching impacts) can further reduce the system efficiency.
○ All cells may be connected in series, even though not all cells are equal or can support the same load.
○ If one cell of a series string fails, the whole battery system or battery pack fails.

Balancing inside a battery system is often carried out by dissipating energy. For example, a dissipative circuit including a resistor can be connected in parallel to battery cells that have a too high state of charge or voltage. It can be more advantageous to exchange energy between the battery cells. However, if the components have to be sized for transferring energy from one to the other, preferably with high energy content or currents, the components usually become too expensive.

WO2018145150A1 is related to using switching assembles for selectively electrically connecting battery cell units so as to a obtain a controllable output voltage profile. In order to determine when a particular cell is to be connected in series, a rotation scheme is employed. In this way, each cell is being used in turn. This results in a fixed order in which the cells are connected for generating to output. Furthermore, for producing an AC output, a sequence of DC setpoints are used. The realization of each setpoint requires at least several system time periods if every cell is to be (dis)charged as calculated. This can result in a high switching frequency (e.g. 1500Hz) for a 50Hz output. The losses of this method are higher than those of the conventional DC/AC conversion working at a similar switching frequency but with a lower transistor count. Additionally, the switching scheme in WO2018145150A1 assumes that the capacity and state of charge of each battery cell is known in advance. Such knowledge is required in the teaching of WO2018145150A1. This can be problematic as no direct or immediate measurement for these may be available. They can be determined using a current sensor per cell resulting in high cost or using a dedicated coulomb counting algorithm involving a dedicated charge/discharge cycle. The capacity may depend on various parameters such as aging, and may change over time or under operational conditions (e.g. one cell may age more quickly than other cells). Even identical cells produced by a same manufacturing system may even have varying capacities. There is a need for a simpler design and a method which is more optimized for AC generation.

A battery system may include a large number of battery cells in a number of racks and modules. If a certain percentage of the cells in one rack or module is defective, the whole battery pack of the battery system may be considered defective. As a result the whole battery may need to be replaced. This can be extremely costly, especially for larger battery systems, for instance employed in electric vehicles. There is a desire to reduce the number of defective battery cells.

SUMMARY OF THE INVENTION

It is an object of the invention to provide for a method and a system that obviates at least one of the above mentioned drawbacks.

Additionally or alternatively, it is an object of the invention to improve the operation of a battery system.

Additionally or alternatively, it is an object of the invention to provide for improved balancing between battery cell units, such as battery cells or battery modules, of a battery system.

Additionally or alternatively, it is an object of the invention to improve the durability and/or robustness of battery systems.

Additionally or alternatively, it is an object of the invention to improve the safety of operation of battery systems with multiple battery modules or cells.

Thereto, the invention provides for a method of operating a battery system comprising a plurality of battery cell units, wherein the battery cell units of the battery system are selectively electrically connectable in series and/or parallel for providing a desired target output voltage, wherein one or more parameters associated to the plurality of the battery cell units are monitored, and wherein the method includes performing for each successive time interval: determining a total number of battery cell units required for generating the desired target output voltage at a present time interval; selecting a subgroup of battery cell units of the plurality of battery cell units based on a predefined criterion coupled to the one or more monitored parameters, the subgroup having the total number of battery cell units required for the present time interval; and operating the battery cell units in the subgroup in series and/or parallel for providing the desired target output voltage at the present time interval.

The invention can effectively reduce the number of defective battery cells in the battery system by performing balancing in an advantageous way. Even if some battery cells are failing, the capacity may be reduced, but the battery may still be used and remain fully operational, as the balancing method keeps that into account. The method can perform balancing whilst handling different capacities and voltages.

The invention provides for a selection mechanism for obtaining dynamic balancing of cells and/or modules of the battery whilst taking the one or more monitored parameters into account using the predefined criterion. This provides for significant advantages compared to pre-set rotation schemes known in the art, which aim to provide each cell with an equal share of the burden. However, often such rotation scheme is not suited in case the capacities and voltages of the battery cell units are not identical. It is advantageous to employ the balancing method according to the invention in order to take into account for example such differences between the battery cell units.

For example more healthy cells/modules or the ones that are more charged with respect to others can be more intensively used, improving the balancing strategy. For instance, cells/modules that are heated up, can be less intensively utilized, resulting in less heat generation such that overheating can be prevented, thereby significantly improving the safety. As a result, such cell/modules may be less discharged compared to other cells/modules that have more intensively being used. This can be compensated by shifting the strategy towards state of charge as criterion for example. Advantageously, the selection/switching pattern of cells/modules can be adapted based on different criteria, such as heating criteria, SoC criteria, etc.

Typically, redundancy is obtained by employing a second redundant battery system. Advantageously, the method according to the invention enables to obtain a redundancy using a single battery with multiple modules. A limited number of modules may be needed for generating the output of the battery. If one of the modules is defective or lagging behind, it can be selectively not used (cf. bypassed). Only a slight oversizing of the battery may be employed, wherein modules can be left out when not required. Hence, it is no longer required to have a redundant second battery system. Improved redundancy can be obtained.

In some examples, the values of the capacities of the individual battery cell units may vary significantly, for instance in a relatively wide range such as between 10 to 30 Ah. The method according to the invention can effectively handle such exemplary situation. Some cells may have a significantly lower state of health (cf. capacity) compared to most other cells. Advantageously, the subgroup of battery cell units employed in the time intervals are selected based on monitoring of parameters/properties of the cells.

Instead of using a predetermined rotation scheme, parameters/properties of the battery cell units are monitored, and the battery cell units to be used in the successive next time intervals are adaptively selected. In this way, the battery pack or battery module can remain operational even if one or more of its cell units have a too low state of health for example (e.g. below a threshold value). Balancing may be performed, whilst cells that have a lower state of health (cf. capacities) are given less burden, and/or vice versa, whilst cells that have a high state of health (cf. capacities) are given a higher burden.

Optionally, the subgroup of battery cell units includes those battery cell units having a highest priority for being used in the present time interval based on the predefined criterion, wherein, during operation, relative priorities of battery cell units are allowed to dynamically change.

It will be appreciated that the method can be used for performing balancing whilst generating a variable output voltage, for example the output voltage changing in function of time (e.g. AC output). However, alternatively, it is also possible to generate a constant output voltage (e.g. DC output voltage).

By selecting the subgroup of battery cell units of the plurality of battery cell units based on the predefined criterion coupled to the one or more monitored parameters, and operating the battery cell units in the subgroup in series and/or parallel for providing the desired target output voltage at the present time interval, not every cell unit of the battery system is necessarily given a same burden for balancing. Some cells, for example being charged more than others, can be burdened more. This is performed dynamically taking into account one or more monitored parameters and employing the predefined criterion. Additionally or alternatively, the fact that particular cells that are significantly heated up can be effectively taken into account during balancing. It is also envisaged that the predefined criterion takes into account multiple parameters. A combination of parameters can also be taken into account such as for example a combination of state of charge and temperature. In some examples, the predefined criterion can be changed during use, for example, initially balancing can be performed based on temperature at a cell/module level, and subsequently, balancing can be performed based on the state of charge. Various other strategies are envisaged.

Optionally, automatic switching of battery cell units for selective connection in series and/or parallel is performed based on the selection of subgroups of battery cell units in successive time intervals.

Operating the battery cell units in the subgroup in series and/or parallel for providing the desired target output voltage at the present time interval can be done by using switching units, for example including MOSFETS. The desired combination of battery cell units (cf. cells/modules) can be selected and adapted for the successive time intervals. The battery cell units that are not participating in the selection can be bypassed.

The battery cell units can be switched between one or more conduct states and a bypass state. The subgroup of battery cell units can be selectively switched in series and/or parallel for providing the desired target output voltage. In some examples, transistors may be selectively operated for performing the switching action (e.g. make a cell/module conducting or bypassed).

The target output voltage can change for the successive time intervals. Thus, some battery cell units can be switched to take a higher burden (e.g. time interval in a first part of a sine wave), and some battery cell units can be switched to take a smaller burden (e.g. time interval at a peak of a sine wave).

For DC to AC conversion, during operation, the battery cell units may be switchable between a positive voltage state, a negative voltage state and a bypass state. For a DC to DC conversion, during operation, the battery cell units may be switchable between a positive voltage state and a bypass state. For example, the subgroup of battery cell units may be selected such as to keep a DC output voltage constant.

Optionally, the one or more monitored parameters includes a value indicative of a history of contribution of each battery cell unit, wherein the value indicative of the history of contribution is calculated based on a duty cycle of the relevant battery cell unit.

By taking the history of contribution into account, it can be prevented that a high frequency switching between two or more battery cell units is carried out because said battery cell units have similar one or more parameters. For instance, alternating switching between two competing battery cell units with almost equal monitored parameter values can be avoided. The switching strategy can be improved by taking in additional to the monitored parameters (e.g. voltage) also the integration of the duty cycle into account, cf. history of how much or how long the battery cell units were in operation starting from a time of reference, e.g. every 15 minutes. Hence, the switching can be performed not only based on instantaneous values of the one or more monitored parameters, but also the duty cycles or history of contribution, which can affect the temperature, the aging, etc. Advantageously, a lower switching frequency can be obtained, reducing losses and also providing for a longer life time.

It will be appreciated that the duty cycle of the relevant battery cell unit can be combined with one or more other parameters in order to determine a value indicative of the history of the contribution.

Optionally, the one or more monitored parameters are at least one of electrical voltage of the relevant battery cell unit, temperature at or approximate the relevant battery cell unit, state of charge of the relevant battery cell unit, state of health of the relevant battery cell unit, or an internal resistance of the relevant battery cell unit.

The method according to the invention does not need the state of health or capacity of the battery cell units as a monitored parameter. However, such parameter can be used if it is available.

Optionally, the value indicative of the history of contribution is calculated at least based on a numerical integration of the duty cycle of the relevant battery cell unit over a particular time frame.

Advantageously, it can be prevented that multiple battery cell units start to compete with one another because a switching re-evaluation is performed too quickly. That's why there can be a time gap before the duty cycle is re-evaluated. Advantageously, degradation of battery cell units can be effectively slowed in this way.

Optionally, said value indicative of the history of contribution is updated at regular time periods, such as for example every 1 to 30 minutes.

Due to the balancing, cells with a lower state of health (cf. capacity) may be less burdened for generating the battery output voltage. That can be beneficial for the health of those battery cells with respect to the other battery cells that are relatively more burdened for generating the battery output voltage. In this way, the life time of batteries can be increased.

The cells with lower state of health can be given a smaller burden, whilst taking into account the duty cycles.

Optionally, the subgroup of battery cell units is determined without relying on capacities and/or ageing of the battery cell units of the battery system.

Optionally, the desired target output voltage is a direct current (DC) voltage or an alternating current (AC) voltage. The AC voltage can be for example single phase AC voltage or multi-phase, such as for instance three-phase AC voltage.

Optionally, a constant switching frequency is performed.

In this way, the battery cell units can more uniformly be affected by detrimental effects of switching.

Optionally, the plurality of battery cell units are sorted in an ordered list based on the predefined criterion, wherein top battery cell units in the ordered list are selected in the subgroups, and wherein the list is automatically updated during operation, enabling changes in the order of the plurality of battery cell units in successive time intervals.

Values of the one or more parameters may be associated to one or more physical parameters or states. A pool of candidate battery cell units may be defined. The priority of the individual battery cell units in said pool can change based on the one or more monitored parameters. For example, the priority of selection may be based on at least one of: a voltage, a temperature or a duty cycle.

In some examples, battery modules are selectively switched on and off in order to create a targeted waveform output voltage. This can be any arbitrary waveform needed for an application (e.g. fixed DC target voltage, sinusoidal voltage, etc.). The method can determine the selection of the next module(s) to switch on or off, and at what point in time this has to be performed. Advantageously, by performing this based on the predefined criterion, balancing can be performed taking into account efficiency, reliability, performance and/or life expectancy of the battery. Advantageously, intermodular charge balancing can be carried in an efficient and cost-effective way.

In an example, the target voltage profile is a sinusoidal wave. A voltage output setpoint (cf. target voltage) can change in function of time, and based on that the battery cell units used for generating said voltage output setpoint can be selected. At the beginning of the cycle, e.g. a first time interval, a low number of battery cell units may be needed to generate the output voltage. Then, for subsequent time intervals, the number of battery cell units that are to be electrically connected for providing the output voltage can be increased until the time interval at the peak of the sinusoidal wave is reached. Then, for the subsequent time intervals, the number of battery cell units is decreased gradually until for example a time interval is reached where none of the battery cell units are used for generating the output voltage (i.e. 0 Volt, at half of the sinusoidal wave cycle). Then, the number of battery cell units for the subsequent time intervals can increase again with reversed polarity, in order to generate output voltages for the negative part of the sinusoidal wave cycle. This can be performed in such a way that a targeted output voltage profile is obtained in the successive time intervals. The whole process for one cycle may take a short period of time, for example 20ms (depending on the frequency of the exemplary sinusoidal wave). The selection of number of battery cell units required for generating a desired/targeted output voltage can thus be performed for each successive time interval. In some examples, from the available total number battery cell units, it is determined how many battery cell units are required for generating the output voltage at the peak of the targeted output voltage profile. This number of needed battery cell units may be provided in a subgroup, which is selected for instance based on the history of contribution (cf. duty cycle), and which can be re-evaluated every 5 to 25 minutes. For a desired constant DC output profile, the number of battery cell units in the subgroup may be dynamically increased if the voltages of the battery cell units decrease.

In some examples, the subgroup is a sub-selection of cell units in the ordered list. For example, at predetermined time periods (e.g. every 5 minutes, every 30 minutes, etc.), battery cell units are allowed to enter or leave the ordered list. The battery cell units in the ordered list can be used to generate the voltage required. Some battery cell units in the ordered list may not be used for generating the output voltage in one or more time intervals. In some examples, two criteria are employed, namely a first criterion for entering/leaving the list (e.g. based on parameters indicative of temperature of the battery cell units), and a second criterion for cells in the list to participate in the output voltage generation (cf. balancing). According to an aspect, the invention provides for a controller for a battery system with a plurality of battery cell units, wherein the controller is configured to operate the battery system by performing the method according to the invention.

Advantageously, according to the invention, no inverter is needed for generating a sinusoidal voltage (e.g. AC signal). The cells in one or more modules of the battery system can be reconfigured for generating the targeted output voltage. More particularly, a selected subset of the cells can be connected in series or parallel generating the targeted output voltage at a respective time interval. Some of the cells may be bypassed at one or more time intervals. The controller can selectively select for each time interval, based on the predefined criterion, which modules and/or cells are to be used for generating the output voltage. Hence, there is not a predetermined or a mandatory order scheme (e.g. rotation scheme) for connecting cells/modules so as to generate the targeted voltage for the successive time intervals. The order in which modules/cells are connected in the successive time intervals can change based on the predefined criterion and the one or more monitored parameters, such that effective dynamic balancing of the battery can be achieved. The selection can be dynamically adapted based on the predefined criterion coupled to the one or more monitored parameters.

According to an aspect, the invention provides for a battery system comprising: a plurality of battery cell units; a switching assembly which is operatively configured to selectively electrically connect battery cell units in series and/or parallel for providing a desired target output voltage, wherein the battery system is configured to monitor one or more parameters associated to the plurality of the battery cell units; and a controller, the controller configured to perform for each successive time interval: determining a total number of battery cell units required for generating the desired target output voltage at a present time interval; selecting a subgroup of battery cell units of the plurality of battery cell units based on a predefined criterion coupled to the one or more monitored parameters, the subgroup having the total number of battery cell units required for the present time interval; and operating the battery cell units in the subgroup in series and/or parallel for providing the desired target output voltage at the present time interval.

The battery cell units (e.g. cells and/or modules) that are used at the successive time intervals or in function of time can be adaptively selected. In some examples, the predefined criterion is a function in which multiple parameters such as temperature, state of charge, general resistance, state of health (cf. capacity), are given in a weighted relationship. The function can be optimized by selectively choosing the contribution of cells/modules in the successive time intervals or in function of time. Advantageously, the capacities / state of health of the battery cell units does not need to be known. However, if this parameter is available, it can be also used.

The battery system may include a battery pack with multiple modules and/or cells. The output voltage of the battery pack may be accurately controlled by adapting the switching of cells/modules of the battery. The modules and/or cells which are connected to provide the output voltage are selected by means of a controller such as for instance the battery management system.

In some cases, the battery system is relatively large, for example including hundreds or even thousands of battery cells. In some cases, it may be costly and inefficient to perform the balancing on the cell level of the battery system. In such cases, it can be advantageous to perform the balancing method on a module level of the battery system, where for example a plurality of battery cells are combined in a battery module. For example, only full bridges may have to be arranged for the modules in order to enable selective switching of said modules in series and/or parallel for generating the desired target output voltage in the successive time intervals. Advantageously, the method can be employed for inter-module balancing. Often, a battery management system (BMS) is associated to each module. The BMS is capable of balancing the cells inside the respective module. However, the BMS may not be capable to perform balancing between modules. The method may enable an effective way to perform balancing between the battery modules of the battery system. If the modules are switched in the correct order, it is possible to balance with very high balancing currents.

In some examples, a list is made of the available/candidate battery cell units which are ordered in the list based on a priority. Depending on what output voltage is targeted at a certain time interval, a selection of battery cell units with highest priority in the list may be selected. The balancing between the battery cell units can be performed using the ordered list which is allowed to dynamically change (real time adaptation of the pool/list of candidate battery cell units).

According to an aspect, the invention provides for an electrical device or an energy storage device comprising at least one battery system according to the invention. The electrical device may for instance be an electric vehicle, an electric tool, etc.

According to an aspect, the invention provides for a computer program product having instructions which, when executed, cause a controller of a battery system to perform the method according to the invention.

It will be appreciated that the capacity of a battery cell unit may be understood as the ability to hold charge. Typically, the capacity decreases over time due to battery aging.

It will be appreciated that the battery cell unit can be a battery cell or a battery module. Hence, the balancing can be carried out at a module level and/or at a cell level of the battery system.

It will be appreciated that a battery cell unit may include one or more battery cells in series.

According to an aspect, the invention provides for a method of operating a battery system comprising a plurality of battery cell units, wherein the battery cell units of the battery system are selectively electrically connectable in series for providing a desired target output voltage, wherein the method includes: monitoring one or more parameters associated to the plurality of battery cell units; tracking a subgroup of battery cell units having top values of the monitored one or more parameters, the subgroup including a predetermined number of battery cell units, and operating the battery cell units in the subgroup in series and/or parallel for providing the desired target output voltage.

In some examples, the battery cell units are sorted based on the monitored voltage. Other parameters such as temperature, or a combination of parameters may also be used. Then, it can be decided on the number of battery cell units to be used. For example, the battery cell units with the highest parameter values (e.g. voltage) may be used for generating the output voltage of the battery system provided to a load. That will impact the voltage of those battery cell units (voltage will decrease), and other battery cell units will start to dynamically enter the top of the list. As a result, the other battery cell units will start to be used automatically, as the list changes and the candidate battery cell units with the highest priority in the list can be selected. In this way, advantageously, the invention can effectively guarantee that a correct number of battery cell units are connected for generating the target output voltage. Moreover, this method can easily cope with irregular operational situations if one of the battery cell units malfunctions for instance (e.g. defective cell, high temperature, etc.).

Optionally, during operation, battery cell units are allowed to dynamically enter or leave the tracked subgroup of battery cell units.

Optionally, automatic switching of battery cell units for selective connection in series and/or parallel is performed based on changes of the tracked subgroup of battery cell units.

It will be appreciated that any of the aspects, features and options described in view of the method apply equally to the system and the described electrical device, energy storage device, and the computer program product. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of a method;
Fig. 2 shows a schematic diagram of an exemplary graph;
Fig. 3 shows a schematic diagram of an exemplary graph;
Fig. 4a, 4b show a schematic diagram of exemplary graphs;
Fig. 5a, 5b, 5c show a schematic diagram of exemplary graphs; and
Fig. 6 shows a schematic diagram of an exemplary flow chart.

DETAILED DESCRIPTION

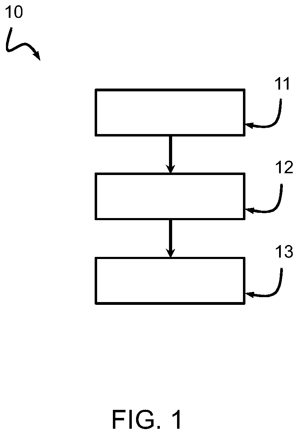

Fig. 1 shows a schematic diagram of a method 10 of operating a battery system comprising a plurality of battery cell units, wherein the battery cell units of the battery system are selectively electrically connectable in series and/or parallel for providing a desired target output voltage. One or more parameters associated to the plurality of the battery cell units are monitored. The method includes performing for each successive time interval: a first step 11 of determining a total number of battery cell units required for generating the desired target output voltage at a present time interval; a second step 12 of selecting a subgroup of battery cell units of the plurality of battery cell units based on a predefined criterion coupled to the one or more monitored parameters, the subgroup having the total number of battery cell units required for the present time interval; and a third step 13 of operating the battery cell units in the subgroup in series and/or parallel for providing the desired target output voltage at the present time interval.

The subgroup can be selected to obtain the targeted output voltage and to balance the battery cell units based on the predefined criterion coupled to the one or more monitored parameters. Hence, reference output voltage tracking and balancing can be effectively carried out simultaneously by performing the adaptive switching (instead of predetermined rotation scheme switching). Advantageously, the method can effectively handle unbalance in electrical properties of the battery cell units. The reference voltage may for instance be provided by the energy management system of the vehicle.

The cells and/or modules of the battery pack can be selectively connected (i.e. conduct) or bypassed in subsequent time intervals. This enables to mimic certain desired voltage output functions (e.g. sinusoidal output, AC), keep DC output voltage constant, etc. Moreover, advantageously, the cells/modules can be balanced with respect to each other. For example, their state-of-charge (SoC) may be balanced by selectively burden the cells/modules with higher SoC for obtaining the desired output voltage. Once the cells/modules are balanced, other techniques may be employed for keeping the cells/modules balanced. Such techniques are known in the art. For example, subsequently a rotation scheme may be employed such that each cell/module gets an average equal share of the burden for generating the output voltage (i.e. during discharge). Next to discharging, it is also possible to perform the balancing method during charging.

Optionally, a function is defined with multiple weighted parameters such as temperature, state-of-charge (SoC), electrical resistance, state-of-health (SoH), wherein this function is optimized by selectively choosing the set of cells/modules which are used for generating the output voltage (i.e. during discharge of the battery pack) or which are selectively charged (i.e. during charging of the battery pack) for subsequent time intervals.

Advantageously, in addition to the balancing aspect, the invention also provides an effective way to obtain redundancy, which can be very important for some applications, such as electric flying vehicles. In the known art, the redundancy is typically obtained by providing an additional redundant battery pack. However, according to the invention, a single battery pack may be slightly oversized, such that the desired maximum output can be obtained by a selected subset of cells/modules within the same battery pack.

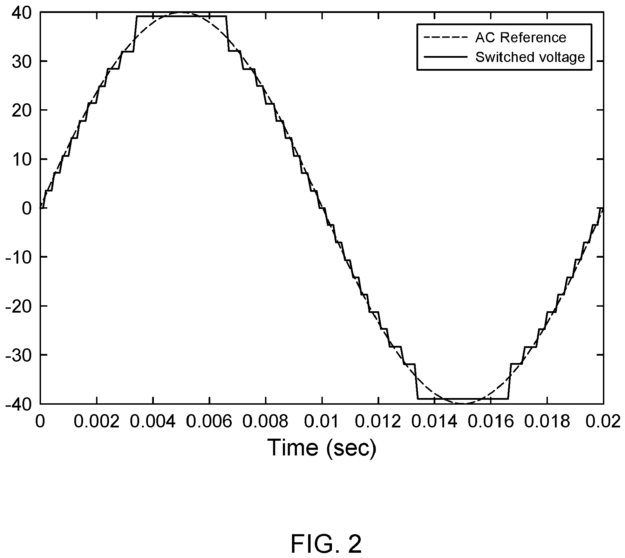

Fig. 2 shows a schematic diagram of an exemplary graph illustrating the generation of AC (sinusoidal) wave from battery series modules. In this example, the AC voltage is created with ten cells or modules or levels, resulting in the generation of the shown 50 Hz pattern. Battery reconfiguration is employed for generating the target voltage output profile (sinusoidal in this example). In this example, battery cells are connected in series and/or parallel in such a way that the instantaneous required output voltage. The method solves some of the drawbacks of employing an inverter. For example, a relatively low switching frequency (= 2 x base frequency), higher efficiency and reduced electromagnetic interference (EMI) can be obtained. Moreover, balancing can be performed in an advantageous way, without relying on the BMS to provide balancing for unequal cells/modules, which would require additional balancing circuits, long balancing time. Additionally, in some cases, battery can't be used while balancing or can't be balanced while in use. According to the method, balancing can be effectively performed while the battery is used (e.g. discharging or charging).

By appropriately selecting which cells or modules are to be used in what part of the AC (sine) wave, balancing can be automatically achieved. For example, balancing based on cell voltage may be required. When the battery discharges (e.g. providing AC current to a load such as an electric motor), the cell with the highest voltage can be connected first (e.g. at 2° of the base cycle) and disconnected last (e.g. at 178°). The cell with the second highest voltage can be connected at e.g. 13° and disconnected at 180°-13°=167°, and so on.

Hence the cell with the highest voltage will provide the load current for the longest time, the cell with the lowest voltage will provide current for the shortest time. When the sine wave reference signal enters its second half period, the same strategy is employed, the connections are merely inversed. In this example, the cell with the lowest voltage is used around 20% duty cycle, the one with the highest voltage around 95%. The average balancing current is therefore 75% of the load current.

In some examples, the battery cell units with higher state of charge may be employed longer for discharging, and the battery cell units with lower state of charge can have shorter discharging. By selectively reducing/increasing relative discharging of battery cell units, a balancing point can be reached. After that, when balancing is reached according to the predefined criterion, a rotation schemes may be applied. Such a rotation scheme may include selecting in a first time interval one or more first battery cell units, in a second time interval one or more second battery cell units, in a third time interval one or more third battery cell units, etc. wherein the rotation scheme is repeated so that a balanced charging/discharging is obtained.

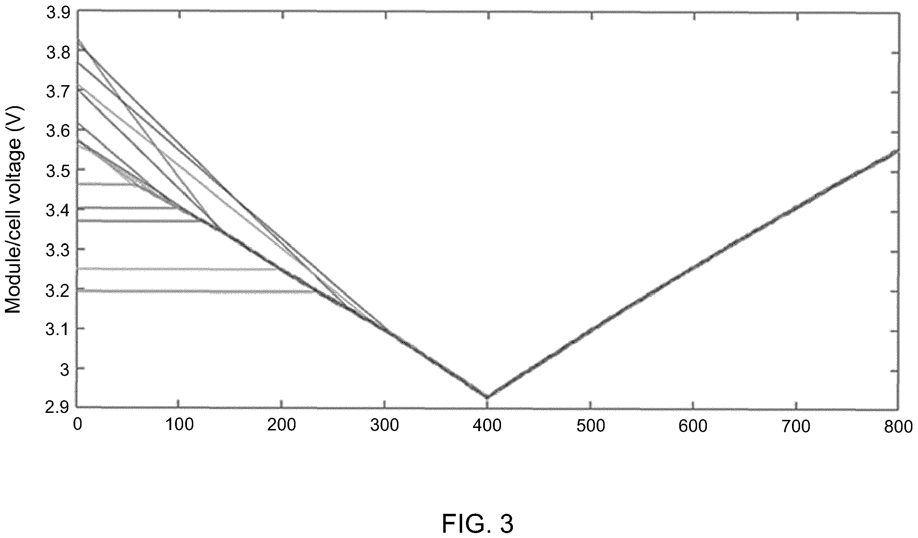

Fig. 3 shows a schematic diagram of an exemplary graph illustrating the balancing of battery cell unit (cf. module/cell) voltage over time. For the sake of clarity, in the example shown in is the figure, cells are modelled as capacitors. When a lower amplitude sine wave is needed, weaker battery cell units can be left out allowing them to cool down or age slower, decreasing the difference with stronger battery cell units. The value of capacities that are used here are varying significantly (from 1.3 kF to 2.7 kF) with nominal capacity value of 2 kF (+/- 700 F deviation), in this example. This is to show how a battery balancing method can be robust against differently combined sets of new and old cells. The method of the application enables balancing of combined different-age cells.

In order to select which cells participate in the switching process, a selection criterion is chosen. In this example, the selection criterion is voltage. The cells/modules can be sorted by voltage for example in a descending order. If the generation of a voltage pattern requires N cells, the top N cells of the sorted list are used in the way described earlier. Other criteria may include temperature in ascending order, SoC in descending order, SoH in descending order, internal resistance etc. Criteria may also be combined, e.g. by use of weighing factor into new criteria.

The use of the top N cells places a load on them thereby lowering them in the sort list until they do not participate in the switching anymore. They are replaced by previously unused cells providing automatic rotation of the switching pattern over all cells. Cycling current through cells while discharging, can increase their voltage, hence their efficiency. If a cell or module is defective or overheated, it can be left out of the switching plan. The battery can still deliver power while operating like normal. Advantageously, no additional hardware is needed for balancing. Balancing can be performed in a fast way. A charge balancing can be performed at a battery cell level and/or at a battery module level. Also, it is possible to perform state of health (cf. age) balancing. Additionally, it is possible to create redundancy or increases robustness or reliability. Also the efficiency can be increased.

Other switching plans include sorting the cells/modules on individual SoC, SoH / capacity (if available) or temperature or a combination, optimizing the battery life expectancy. It will be appreciated that various criteria can be taken into account.

In this example, a sine wave is generated in combination with balancing. This can provide significant advantages for example for battery systems which have a large difference in performance of individual cells or modules (e.g. due to aging or excessive use).

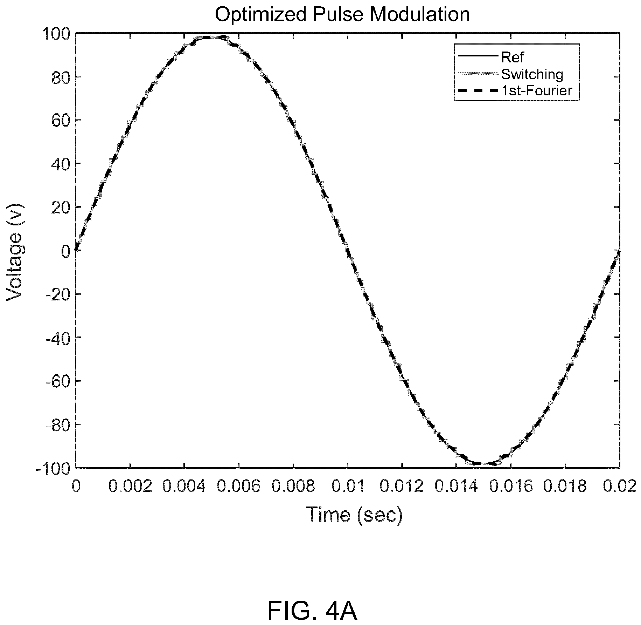

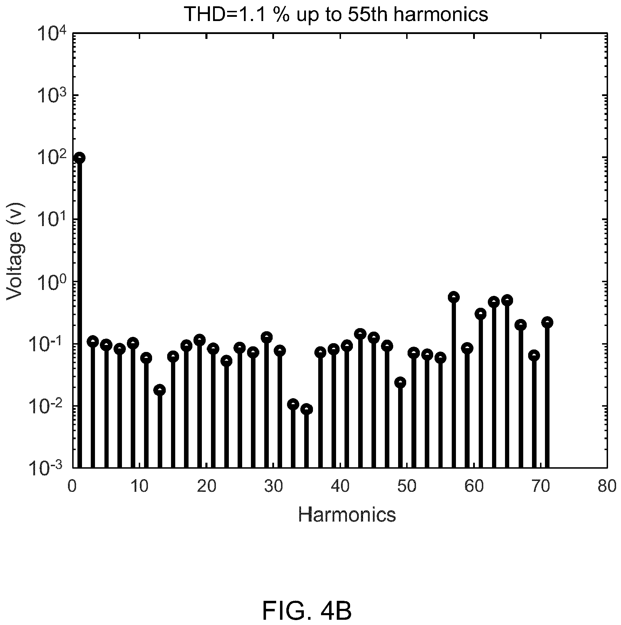

Fig. 4a, 4b show a schematic diagram of exemplary graphs. In this example, a single-phase AC voltage output is generated by a 28-cell battery pack (100Ap, 50 Hz) subjected to an improved quality with cancellation of 55 harmonics. Advantageously, by performing the method according to the disclosure, it is possible to consider some sort of optimized switching pattern (OSP) that can result in further cancellation of higher harmonics. Advantageously, this can reduce the filtering and EMI requirements for the battery system, resulting in a significantly more cost-effective design.

In this example, a battery pack with 28 cells is used to generate an AC voltage of 100v (peak) at 50 Hz, where the goal is to carry out cancellation of up to 55th harmonics in the output generated voltage. By performing the OSP, it is possible to cover the variations in the cell voltages at cycling (charging or discharging) so as to deliver a controlled AC voltage at the output. As it can be seen in the shown graph, the largest component up to 55th harmonics has voltage amplitude of 0.1V (i.e. 0.1% of the output voltage) and the total harmonic distortion THD% is around 1%. This is promising for practical intermodular switching applications at such small frequency switching (-double fundamental frequency of 100Hz only), while there is no need for any filtering units due to such high quality sin wave.

The above single-phase can be extended to three-phase outputs for three-phase drive/inverter-connected battery applications where it will be added opportunities to e.g. inject third harmonics to reduce the peak of single phase AC generation, while at the load/charger side the same demanded power will be delivered/supplied.

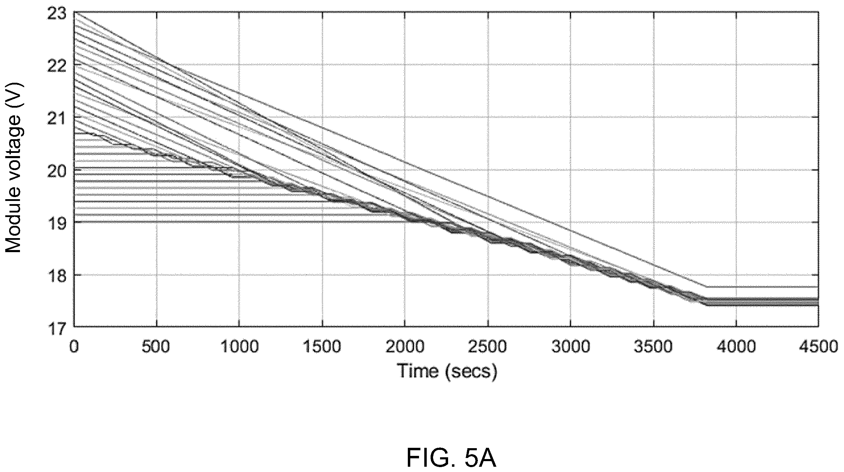

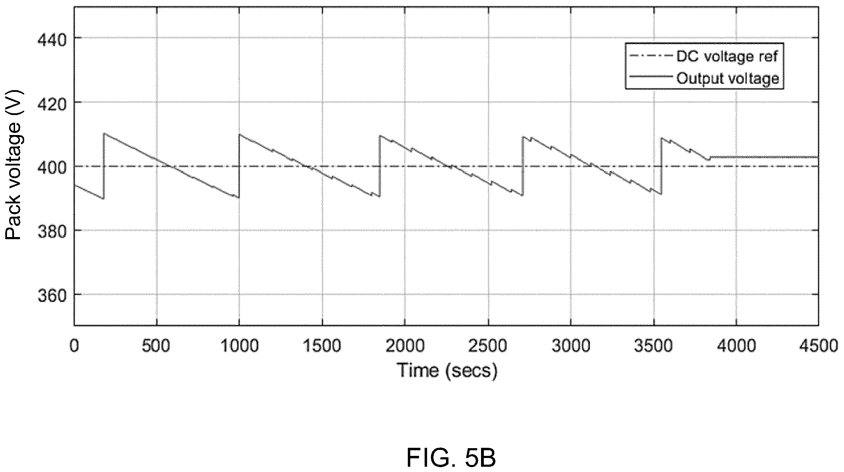

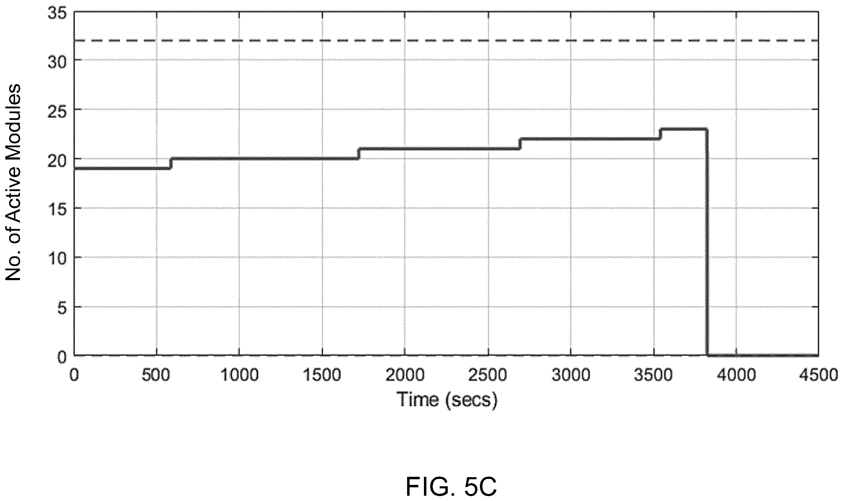

Fig. 5a, 5b, 5c show a schematic diagram of exemplary graphs. The disclosure is not limited to AC generation. DC output can be generated in a similar way given a DC voltage reference independent of the cell/module voltages. In this example, the cell/module voltage is decreasing. There are 32 modules in battery pack (21V nominal), and a DC voltage of 400V is required to generate at the output. As the battery is discharged, the output voltage is kept constant. The switching frequency can be in the mHz range. Note that during a period where the number of active modules is constant, switching may occur to substitute an active module by an inactive one in order to balance the pack and/or for example letting the previously active module cool down or recover in some way.

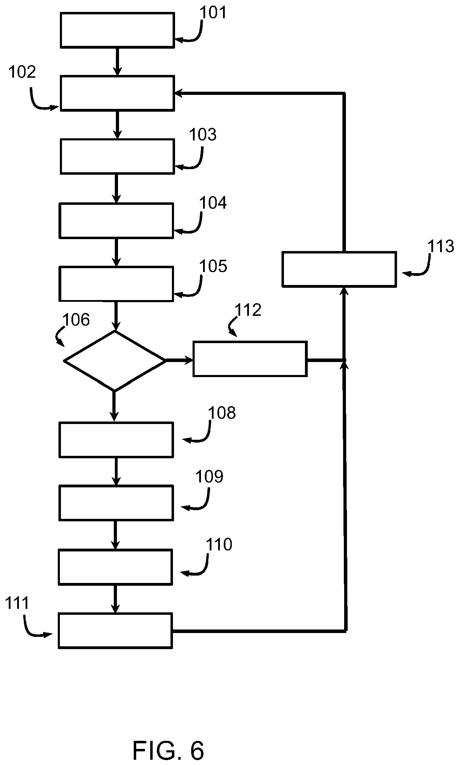

Fig. 6 shows a schematic diagram of an exemplary flow chart. In a first step 101, parameters are initialized, such as initialization of Vac (voltage), fac (frequency), N (number), VmMax (maximum voltage), VmMin (minimum voltage), dt (time interval), r (penalty for duty cycling updating), t=0 (set time to zero), and dD[i]=0. In a next step 102, t is set to t+dt, i.e. t = t+dt. In a next step 103, V[i] is measured (i.e. voltage of all modules). This example performs inter-module balancing, which can be advantageous is various examples. However, the method can also be used for inter-cell balancing. In a next step 104, a pack average voltage (Vbar) is calculated, and nM=int(Vac/Vbar) is updated. In a next step 105, for nM modules it is calculated: 1) optimized switching times topt[i]; and 2) duty cycles:

$$Duty[i]=1/fac-4*topt[i] \tag{1}$$

In a next step 106, it is checked whether the duty cycling is updated. If the duty cycling is not updated, the next step 112 is carried out which involves updating dD[i]=0 and keeping topt[i]/Duty[i]. In a next step 113, the nM nominated modules are charged/discharged based on topt[i]/Duty[i]. Then, subsequently step 102 is again carried out (next time interval). If the duty cycling is updated, the next step 108 involves calculating

$$dD[i]=dD[i]+r*Duty[i] \tag{2}$$

In a next step 109, the cost function is calculated for all modules:

$$J[i]=V[i]+r*dD[i] \text{ if charging, or,} \tag{3}$$

J[i]=V[i]-r*dD[i] if discharging.

A next step 110 involves sorting J and find modules indexes. Ascend: if charging; descend if discharging. In a next step 111, first nM modules are associated from this sorted cost function to use in the next duty cycling. Subsequently, step 113 is carried out, followed by step 102.

The method enables automatic planning which cells/modules are to be active and at what point in time they are activated and deactivated for improved performance. This is different from a random order, sequential order or rotating order that are addressed by prior arts. The dynamic switching can involve evaluation based on criteria differentiating individual module/cells: U (voltage), T temperature), capacity, SoC, SoH, etc. A combination of different criteria may also be used. For example, it may involve an evaluation rule including a combination of mentioned factors with e.g. weighing factors. As result, increased capacity of battery cell with fast and improved balancing can be obtained. Furthermore, time and cost of the battery pack maintenances can be reduced, and lifetime of batteries can be extended.

In some examples, the method according to the invention can also be used to determine the point in time at which switching should occur in order to generate an AC output with low higher harmonics content or a stable DC output.

With regards to lifetime, the method of the disclosure can greatly impact the lithium-ion batteries safety as well as increasing lifetime of cells/modules as unsafe/undesired and life-decreasing factors such as operation under over-temperatures, over-voltages and other SOA-concerned operations are highly mitigated.

In battery packs with large number of parallel modules employed in the art, typically when the number of failed modules in single rack are exceeding some threshold (often out of 10-15% of the total number of modules/rack), the system/device is interrupted and the whole battery pack is repaired/replaced, which can be very costly, labor intensive and/or time-consuming.

It will be appreciated that, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1. A method of operating a battery system comprising a plurality of battery cell units, wherein the battery cell units of the battery system are selectively electrically connectable in series and/or parallel for providing a desired target output voltage, wherein one or more parameters associated to the plurality of the battery cell units are monitored, and wherein the method includes performing for each successive time interval:

    determining a total number of battery cell units required for generating the desired target output voltage at a present time interval,
    selecting a subgroup of battery cell units of the plurality of battery cell units based on a predefined criterion coupled to the one or more monitored parameters, the subgroup having the total number of battery cell units required for the present time interval, and
    operating the battery cell units in the subgroup in series and/or parallel for providing the desired target output voltage at the present time interval.

2. The method according to claim 1, wherein the subgroup of battery cell units includes those battery cell units having a highest priority for being used in the present time interval based on the predefined criterion, wherein, during operation, relative priorities of battery cell units are allowed to dynamically change.

3. The method according to claim 1 or 2, wherein automatic switching of battery cell units for selective connection in series and/or parallel is performed based on the selection of subgroups of battery cell units in successive time intervals.

4. The method according to any one of the preceding claims, wherein the one or more monitored parameters includes a value indicative of a history of contribution of each battery cell unit, wherein the value indicative of the history of contribution is calculated based on a duty cycle of the relevant battery cell unit.

5. The method according to any one of the preceding claims, wherein the one or more monitored parameters are at least one of electrical voltage of the relevant battery cell unit, temperature at or approximate the relevant battery cell unit, state of charge of the relevant battery cell unit, state of health of the relevant battery cell unit, or an internal resistance of the relevant battery cell unit.

6. The method according to claim 5, wherein the value indicative of the history of contribution is calculated at least based on a numerical integration of the duty cycle of the relevant battery cell unit over a particular time frame.

7. The method according to claim 5 or 6, wherein said value indicative of the history of contribution is updated at regular time periods, such as of example every 1 to 30 minutes.

8. The method according to any one of the preceding claims, wherein the subgroup of battery cell units is determined without relying on capacities and/or ageing of the battery cell units of the battery system.

9. The method according to any one of the preceding claims, wherein the desired target output voltage is a direct current (DC) voltage or an alternating current (AC) voltage.

10. The method according to any one of the preceding claims, wherein a constant switching frequency is performed.

11. The method according to any one of the preceding claims, wherein the plurality of battery cell units are sorted in an ordered list based on the predefined criterion, wherein top battery cell units in the ordered list are selected in the subgroups, and wherein the list is automatically updated during operation, enabling changes in the order of the plurality of battery cell units in successive time intervals.

12. A controller for a battery system with a plurality of battery cell units, wherein the controller is configured to operate the battery system by performing the method according to any one of the preceding claims 1-11.

13. A battery system comprising:

a plurality of battery cell units;
a switching assembly which is operatively configured to selectively electrically connect battery cell units in series and/or parallel for providing a desired target output voltage, wherein the battery system is configured to monitor one or more parameters associated to the plurality of the battery cell units; and
a controller, the controller configured to perform for each successive time interval:

determining a total number of battery cell units required for generating the desired target output voltage at a present time interval;
selecting a subgroup of battery cell units of the plurality of battery cell units based on a predefined criterion coupled to the one or more monitored parameters, the subgroup having the total number of battery cell units required for the present time interval; and
operating the battery cell units in the subgroup in series and/or parallel for providing the desired target output voltage at the present time interval.

14. An electrical device or an energy storage device comprising at least one battery system according to claim 13.

15. A computer program product having instructions which, when executed, cause a controller of a battery system to perform the method according to any one of the preceding claims 1 to 11.

FIG. 1

FIG. 2

FIG. 3

EP 4 322 365 A1

FIG. 4A

FIG. 4B

FIG. 5A

EP 4 322 365 A1

FIG. 5B

FIG. 5C

FIG. 6

Europäisches Patentamt
European Patent Office
Office européen des brevets

## EUROPEAN SEARCH REPORT

Application Number

EP 22 18 9560

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/249873 A1 (DESPESSE GHISLAIN [FR] ET AL) 12 August 2021 (2021-08-12)<br>* figures 1-4 *<br>* paragraph [0052] *<br>* paragraph [0065] – paragraph [0073] *<br>* paragraph [0076] – paragraph [0080] *<br>* paragraph [0098] – paragraph [0102] *<br>----- | 1-15 | INV.<br>H02J7/00 |
| X | EP 3 975 374 A1 (UNIV DER BUNDESWEHR MUENCHEN [DE]) 30 March 2022 (2022-03-30)<br>* figures 5-10 *<br>* paragraph [0020] – paragraph [0022] *<br>* paragraph [0046] *<br>* paragraph [0050] – paragraph [0051] *<br>* paragraph [0089] – paragraph [0094] *<br>* claims 1,3 *<br>----- | 1,12,13, 15 | |
| X | US 2019/109469 A1 (KUFNER WALTER [DE]) 11 April 2019 (2019-04-11)<br>* figure 1 *<br>* paragraph [0055] *<br>* paragraph [0057] *<br>----- | 1,12,13, 15 | |

TECHNICAL FIELDS SEARCHED (IPC)

H02J

The present search report has been drawn up for all claims

| Place of search | Date of completion of the search | Examiner |
|---|---|---|
| Munich | 31 January 2023 | Martin, Raynald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 9560

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2023

| Patent document cited in search report | | Publication date | Patent family member(s) | | Publication date |
|---|---|---|---|---|---|
| US 2021249873 | A1 | 12-08-2021 | CA | 3102416 A1 | 12-12-2019 |
| | | | EP | 3811487 A1 | 28-04-2021 |
| | | | FR | 3082677 A1 | 20-12-2019 |
| | | | US | 2021249873 A1 | 12-08-2021 |
| | | | WO | 2019234348 A1 | 12-12-2019 |
| EP 3975374 | A1 | 30-03-2022 | EP | 3975374 A1 | 30-03-2022 |
| | | | WO | 2022063692 A1 | 31-03-2022 |
| US 2019109469 | A1 | 11-04-2019 | DE | 102015010531 A1 | 16-02-2017 |
| | | | US | 2017047747 A1 | 16-02-2017 |
| | | | US | 2019109469 A1 | 11-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018145150 A1